# EUROPÄISCHE PATENTSCHRIFT

(11) **EP 1 278 652 B1**
(45) Veröffentlichungstag und Bekanntmachung des Hinweises auf die Patenterteilung: **04.05.2005**
(21) Anmeldenummer: 01913519.3
(22) Anmeldetag: 19.01.2001
(51) Int. Cl.: B60N 2/02, B60R 16/02

(54) **VORRICHTUNG UND VERFAHREN ZUR BENUTZERSPEZIFISCHEN EINSTELLUNG EINES GERÄTES, INSBESONDERE EINES KRAFTFAHRZEUGES**
DEVICE AND METHOD FOR USER-SPECIFICALLY ADJUSTING A DEVICE, ESPECIALLY AN AUTOMOBILE
DISPOSITIF ET PROCEDE POUR ADAPTER UNE MACHINE, NOTAMMENT UN VEHICULE MOTORISE, AUX BESOINS DE SON UTILISATEUR

(30) Priorität: 28.04.2000 DE 10021068
(43) Veröffentlichungstag der Anmeldung: 29.01.2003
(73) Patentinhaber: ROBERT BOSCH GMBH, 70442 Stuttgart (DE)
(72) Erfinder: PLUMEIER, Joerg, 38126 Braunschweig (OT Rautheim) (DE); KERSKEN, Ulrich, 31199 Diekholzen (DE)
(86) Internationale Anmeldenummer: PCT/DE2001/000209
(87) Internationale Veröffentlichungsnummer: WO 2001/083257

(56) Entgegenhaltungen:
- EP-A- 1 013 510
- DE-A- 3 817 495
- DE-A- 19 649 149
- GB-A- 2 336 221
- US-A- 5 924 755
- US-A- 5 938 716

## Beschreibung

### Technisches Gebiet

Die Erfindung betrifft ein Verfahren zur benutzerspezifischen Einstellung eines Gerätes wie zum Beispiel eines Kraftfahrzeuges, insbesondere ein solches Verfahren, bei dem benutzerspezifische Daten auf einem externen Speichermedium abgespeichert werden und die Einstellung des Gerätes anhand dieser Daten vorgenommen wird. Weiterhin betrifft die Erfindung eine Vorrichtung zur benutzerspezifischen Einstellung eines Gerätes wie insbesondere eines Kraftfahrzeuges, enthaltend ein externes Speichermedium für benutzerspezifische Daten sowie eine Verarbeitungseinheit, welche diese Daten lesen und entsprechende Veränderungen des Gerätes ausführen kann.

### Stand der Technik

Von zahlreichen komplexen technischen Geräten ist es bekannt, dass diese hinsichtlich verschiedener Größen und Parameter spezifisch an einen bestimmten Benutzer angepasst werden können. Beispielhaft für ein solches Gerät wird im folgenden ein Kraftfahrzeug betrachtet, ohne dass die Erfindung jedoch hierauf beschränkt wäre. Zu den an den Benutzer (Fahrer oder Beifahrer) anpassbaren Einstellungen eines modernen Kraftfahrzeuges gehören zum Beispiel die Höhe und Position des Sitzes, die Neigung der Rückenlehne, die Einstellung von Rückspiegeln, die Innenraumtemperatur des Kraftfahrzeuges, die bevorzugte Lautstärke und/oder Sendereinstellung eines Radios und dergleichen.

Es sind Kraftfahrzeuge bekannt, bei denen die genannten variablen Einstellungen für verschiedene Benutzer auf einem dem Benutzer zugeordneten Speichermedium abgelegt werden. Unter Verwendung dieser Einstellungswerte können dann verschiedene Benutzer dasselbe Kraftfahrzeug benutzen, wobei sie jeweils die von Ihnen bevorzugten und als bequem empfundenen Einstellungen vorfinden. Der benutzerspezifische Abruf von Geräteeinstellungen kann dabei auf einer reinen Identifikation des Benutzers beruhen, wobei die zugeordneten Einstellungen im Gerät selbst abgespeichert sind und nach Identifikation des Benutzers von dort bereitgestellt werden. Daneben ist es auch möglich, die benutzerspezifischen Einstellungen auf einem externen Speichermedium abzulegen, welches der Benutzer dann dem Fahrzeug zur Verfügung stellen muss, damit die dort gespeicherten Daten eingelesen und die entsprechenden Einstellungsveränderungen ausgeführt werden können. Die genannten benutzerspezifischen Einstellungen werden bei den bekannten Systemen in einem gerätespezifischen Format abgespeichert, also zum Beispiel in der Form "Sitz in Raste 3 ", " Rückenlehne in Position 5" etc.

Solche Systeme sind beispielsweise aus DE-A-38 17 495 und EP-A-1 083 096 bekannt.

Weiterhin ist es bei den bekannten Systemen von Nachteil, dass es keine Kontrolle gibt, ob die vom Benutzer vorgenommenen Einstellungen auch unter objektiven Gesichtspunkten sinnvoll sind. Zum Beispiel ist es bekannt, dass viele Fahrer und Beifahrer im Fahrzeug keine ergonomisch bzw. physiologische optimale Sitzposition einnehmen. Dies führt bei längeren Fahrten zu vorzeitiger Ermüdung und zu Verspannungen.

### Darstellung der Erfindung, Aufgabe, Lösung, Vorteile

Vor diesem Hintergrund war es Aufgabe der vorliegenden Erfindung, ein Verfahren und eine Vorrichtung zur benutzerspezifischen Einstellung eines Geräts wie insbesondere eines Kraftfahrzeuges bereitzustellen, welche eine verbesserte und vereinfachte Festlegung der Einstellungswerte erlauben.

Diese Aufgabe wird durch ein Verfahren mit den Merkmalen des Anspruchs 1 sowie eine Vorrichtung mit den Merkmalen des Anspruchs 6 gelöst. Vorteilhafte Ausgestaltungen sind in den jeweiligen Unteransprüchen enthalten.

Bei dem ersten Verfahren zur benutzerspezifischen Einstellung eines Gerätes, insbesondere eines Kraftfahrzeuges, werden benutzerspezifische Daten auf einem externen Speichermedium abgespeichert, und die Einstellung des Gerätes wird anhand dieser Daten vorgenommen. Das Verfahren ist dadurch gekennzeichnet, dass die genannten Daten insgesamt oder zumindest zum Teil geräteunabhängige Referenzwerte sind. Die Verwendung geräteunabhängiger Referenzwerte zur Codierung der benutzerspezifischen Einstellungen hat den Vorteil, dass ein Benutzer mit den auf dem Speichermedium abgelegten Daten in der Lage ist, unterschiedliche Geräte zu benutzen, zum Beispiel unterschiedliche Kraftfahrzeugtypen zu fahren, wobei er jeweils seine bevorzugten Einstellungen vorfindet. Durch das erfindungsgemäße Verfahren wird der mit der benutzerspezifischen Einstellmöglichkeit eingeschlagene Weg der Individualisierung von Geräten ergänzt beziehungsweise vollendet, da nun nicht mehr nur ein Gerät beziehungsweise Gerätetyp sich an verschiedene Benutzer anpassen kann, sondern da darüber hinaus auch ein Benutzer verschiedene Geräte beziehungsweise Gerätetypen jeweils in optimaler Einstellung vorfindet, ohne dass zuvor eine Einstellungsprozedur an diesem Gerät auszuführen wäre.

Neben der Bequemlichkeit beim Wechsel von Gerätetypen hat das erfindungsgemäße Verfahren den weiteren Vorteil, dass durch die Rückführung der Geräteeinstellungen auf geräteunabhängige Referenzwerte eine Objektivierung und Vergleichbarkeit der Einstellungen erreicht wird, welche es erlaubt, fehlerhafte Einstellungen zu erkennen und zu korrigieren.

Zur Gewinnung geräteunabhängiger Referenzdaten stehen verschiedene Methoden zur Verfügung. Wenn eine analytische Beziehung zwischen gerätespezifischen Daten und zugehörigen geräteunabhängigen Referenzdaten nicht bekannt oder zu komplex ist, können die Referenzwerte auch empirisch bestimmt werden. Die Referenzwerte können zum Beispiel die gerätespezifischen Einstellungen eines bestimmten Standardgerätes sein. Durch Vergleich der Einstellungen, die verschiedene Benutzer auf diesem Standardgerät und auf anderen Geräten vornehmen, könnten dann Beispieldatensätze für die Darstellung einer bestimmten Einstellung durch verschiedene gerätespezifische Einstellungsparameter gewonnen werden. Diese lassen sich dann durch die genannten Einstellungen des Standardgerätes oder durch eine andere abstrakte Parameterdarstellung klassifizieren und somit geräteunabhängig codieren. Letztendlich handelt es sich hierbei um das mathematische Problem, dass eine im Hintergrund stehende Größe (die benutzerspezifische Einstellung) in verschiedenen Koordinatensystemen (gerätespezifische Parameter der Einstellung) dargestellt wird und es darum geht, die analytisch unbekannte Beziehung zwischen den Koordinaten und der dahinter stehenden Größe möglichst gut empirisch zu erfassen. Hierfür können zum Beispiel statistische Verfahren oder künstliche neuronale Netzwerke als adaptive Abbildungen eingesetzt werden:

Bei den Referenzwerten kann es sich vorzugsweise um biometrische Daten des jeweiligen Benutzers handeln. Die Verwendung von biometrischen Daten als geräteunabhängige Referenzwerte beruht auf dem analytischen Verständnis, dass viele Geräteeinstellungen wie zum Beispiel die Sitzhöhe oder Sitzposition durch solche biometrischen Daten determiniert werden. Diese biometrischen Daten lassen sich somit zweckmäßig zur Codierung der benutzerspezifischen Einstellung einsetzen, da sie ausschließlich vom Benutzer abhängig und von jeglichem Gerät unabhängig sind. Ferner haben biometrische Daten den Vorteil, dass sie unmittelbar ohne Beteiligung eines Gerätes gewonnen und auf dem Speichermedium abgelegt werden können. Ein Benutzer muss somit nicht mehr erst an mindestens einem Gerät Geräteeinstellungen vornehmen. Darüber hinaus ist von Vorteil, dass die Umwandlung biometrischer Daten in Geräteeinstellungen dem Gerät selbst überlassen wird und somit automatisch erfolgt. Dies stellt sicher, dass die Geräteeinstellungen in einem objektiven Sinne optimal zu den biometrischen Daten passen, das heißt, dass sie ergonomische oder physiologische Regeln und Erkenntnisse berücksichtigen können. Unter Missachtung solcher Regeln vom Benutzer selbst vorgenommene ungünstige Geräteeinstellungen können somit vermieden werden.

Nach einer Weiterbildung des Verfahrens können die geräteunabhängigen Referenzwerte durch Umwandlung von vorgegebenen Geräteeinstellungen gewonnen werden. Das heißt, dass nicht wie bei der Ausführung einer benutzerspezifischen Einstellung die geräteunabhängigen Referenzwerte vorgegeben sind und anhand von ihnen die Einstellung des Gerätes erfolgt, sondern dass vielmehr der Ausgangspunkt eine vom Benutzer in herkömmlicher Weise vorgenommene Geräteeinstellung ist. Diese Geräteeinstellung wird dann in geräteunabhängigen Referenzwerten codiert, welche nachfolgend zur Verwendung auf anderen Geräten beziehungsweise Gerätetypen zur Verfügung stehen. Mit dem Verfahren ist somit die Bestimmung der geräteunabhängigen Referenzwerte möglich, ohne dass der Benutzer selbst den Zusammenhang zwischen Geräteeinstellung und Referenzwerten kennen muss. Vielmehr reicht es aus, dass der Benutzer einmal an einem bestimmten Gerät eine individuell angepasste Einstellung vornimmt, welche dann in geräteunabhängig codierter Form zur Verwendung auf anderen Gerätetypen zur Verfügung steht.

Die Erfindung betrifft weiterhin ein Verfahren zur benutzerspezifischen Einstellung eines Kraftfahrzeuges, welches dadurch gekennzeichnet ist, dass bestimmte Einzeleinstellungen während der Benutzung des Kraftfahrzeuges variiert werden. Das Verfahren kann insbesondere weitere Merkmale der oben erläuterten Art aufweisen, also eine Codierung der benutzerspezifischen Einstellungen in geräteunabhängigen Referenzwerten erlauben. Mit dem Verfahren kann ein höherer Komfort und eine bessere individuelle Einstellung des Kraftfahrzeuges erzielt werden, da die üblicherweise vorgenommenen konstanten Einstellungen nicht immer optimal sind. Ein bevorzugtes Beispiel für eine Einzeleinstellung, welche während der Benutzung des Kraftfahrzeuges variiert werden kann, ist die Einstellung des Sitzes des Fahrers und/oder der Passagiere. Die üblicherweise vorliegende statische Sitzposition während der Fahrt führt zu einseitiger Belastung bestimmter Muskelgruppen und Körperteile. Diese Problematik kann mit dem erfindungsgemäßen Verfahren der dynamischen Anpassung beziehungsweise Veränderung der Einstellungen vermieden werden. Durch die Variationen der Sitzposition wird während einer längeren Fahrt einer Ermüdung vorgebeugt, und die Blutzirkulation wird verbessert. Die Veränderungen der Einstellungen können dabei autonom nach einem vorgegebenen Muster beziehungsweise Programm gesteuert erfolgen oder durch Messungen des Fahrerzustandes nach Bedarf geregelt beziehungsweise initiiert werden. Selbstverständlich müssen die Veränderungen in einem gewissen Rahmen bleiben, innerhalb dessen die Einstellungen für den jeweiligen Benutzer noch angemessen sind.

Zur Erfindung gehört weiterhin eine Vorrichtung zur benutzerspezifischen Einstellung eines Gerätes, insbesondere eines Kraftfahrzeuges, welche ein externes Speichermedium für benutzerspezifische Daten sowie eine Verarbeitungseinheit enthält, welche diese Daten lesen und entsprechende Veränderungen des Gerätes ausführen kann. Die Vorrichtung ist dadurch gekennzeichnet, dass die Verarbeitungseinheit so eingerichtet ist, dass sie Daten in Form von geräteunabhängigen Referenzwerten in gerätespezifische Einstellungswerte umwandeln kann. Mit der Vorrichtung kann somit ein Gerät wie zum Beispiel ein Kraftfahrzeug hinsichtlich verschiedener Parameter individuell auf einen Benutzer eingestellt werden, wobei die Daten der individuellen Einstellung in Form geräteunabhängiger Referenzwerte auf einem externen Speichermedium abgelegt sind. Dies ermöglicht es, dass die Vorrichtung das Gerät an unterschiedliche Benutzer individuell anpassen kann, ohne dass diese Nutzer zuvor jemals eine Einstellung an dem Gerät selbst vorgenommen haben. Es reicht vielmehr, dass die Benutzer ihre auf dem externen Speichermedium abgelegten benutzerspezifischen Daten in Form geräteunabhängiger Referenzwerte mitbringen. Die Ausstattung verschiedener Geräte mit je einer an das jeweilige Gerät angepassten erfindungsgemäßen Vorrichtung ermöglicht einem Benutzer somit den problemlosen Wechsel zwischen diesen Geräten, wobei er jedes Gerät jeweils mit optimaler Einstellung vorfindet.

Gemäß einer Weiterbildung der Vorrichtung ist die Verarbeitungseinheit so eingerichtet, dass sie gerätespezifische Einstellungswerte in geräteunabhängige Referenzwerte umwandeln kann. Die Verarbeitungseinheit ist somit in der Lage, die Umwandlung zwischen gerätespezifischen Einstellungswerten und geräteunabhängigen Referenzwerten in beide Richtungen vorzunehmen. Die Rückrichtung erlaubt dabei insbesondere, dass ein Benutzer an dem Gerät in herkömmlicher Weise Einstellungen vornimmt, bis das Gerät optimal auf seine Wünsche eingestellt ist. Die so vorgenommene Einstellung kann dann über die Verarbeitungseinheit in Form geräteunabhängiger Referenzwerte abgespeichert werden und steht daraufhin dem Benutzer zur Verwendung auf anderen Geräten beziehungsweise Gerätetypen zur Verfügung, ohne dass dort eine erneute Einstellungsprozedur erforderlich wäre.

Bei dem externen Speichermedium kann es sich vorzugsweise um eine Chipkarte, ein Mobiltelefon oder einen Computer handeln. Der Computer liegt vorzugsweise in Form eines kleinen, tragbaren Gerätes wie zum Beispiel eines Personal Digital Assistant (PDA) oder eines Laptops vor. Derartige Geräte besitzen einerseits den notwendigen internen Speicher zur Speicherung benutzerspezifischer Daten und sind andererseits weit verbreitet, so dass sie die Notwendigkeit eines separaten externen Speichermediums überflüssig machen.

Weiterhin besitzen das externe Speichermedium und die Verarbeitungseinheit vorzugsweise Mittel für eine drahtlose Datenübertragung zwischen Speichermedium und Verarbeitungseinheit. Die Datenübertragung kann dabei insbesondere über Funk oder Infrarot stattfinden. Die drahtlose Übermittlung von Daten erlaubt es dem Benutzer mit geringem Aufwand, dem Gerät seine benutzerspezifischen Daten zu übermitteln.

Gemäß einer anderen Weiterentwicklung der Vorrichtung kann die Verarbeitungseinheit so eingerichtet sein, dass sie während des Betriebs des Gerätes autonom und zum Beispiel kontinuierlich oder intermittierend Einstellungsveränderungen ausführen kann. Solche Einstellungsveränderungen haben sich gerade bei einem Kraftfahrzeug für bestimmte Parameter als nützlich erwiesen, da hier eine durchgehende statische Einstellung nachteilig sein kann. Dies gilt zum Beispiel für die Einstellung des Sitzes, bei dem eine Veränderung während einer längeren Fahrt einer Ermüdung vorbeugen und die Blutzirkulation verbessern kann. Einer solchen Veränderung von Einstellungen kommt dabei eigenständige erfinderische Bedeutung zu, da sie ihren Nutzen auch unabhängig von der Verwendung benutzerspezifischer und geräteunabhängiger Referenzwerte erzielen kann.

### Bester Weg zur Ausführung der Erfindung

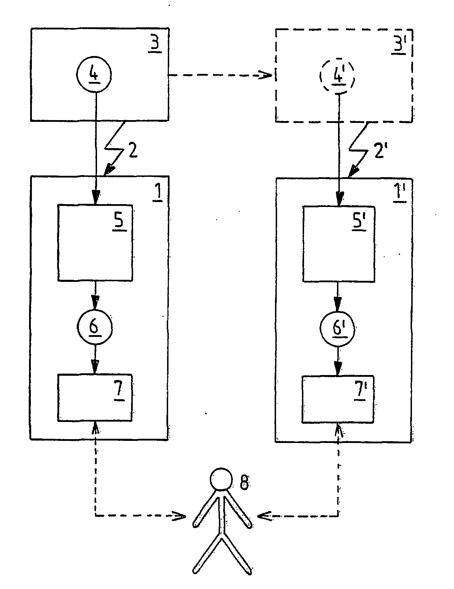

Im folgenden wird die Erfindung mit Hilfe der Figur beispielhaft erläutert.

Die einzige Figur zeigt schematisch die geräteunabhängige Speicherung und Verwendung von benutzerspezifischen Einstellungen. Das im linken Teil der Figur angedeutete Gerät, bei dem es sich zum Beispiel um ein Kraftfahrzeug 1 handeln kann, enthält eine drahtgebundene oder vorzugsweise drahtlose Schnittstelle 2 zu einem externen Speichermedium 3. Bei dem externen Speichermedium 3 kann es sich zum Beispiel um eine Chipkarte nach dem internationalen Standard ISO 7816 handeln. Auf der Chipkarte 3 sind benutzerspezifische Daten 4 abgelegt, welche über die Schnittstelle 2 an das Kraftfahrzeug 1 übertragen werden können.

Erfindungsgemäß handelt es sich bei den benutzerspezifischen Daten 4 um Referenzwerte in einem geräteunabhängigen Format. Vorzugsweise werden die Referenzwerte durch biometrische Daten des Benutzers wie zum Beispiel Körpergröße, Gewicht, Beinlänge und dergleichen gebildet.

Basierend auf den geräteunabhängigen Referenzwerten 4 berechnet eine Verarbeitungseinheit 5 im Kraftfahrzeug 1 gerätespezifische Einstellungswerte 6. Das heißt, dass zum Beispiel biometrische Daten über die Körpergröße in eine geeignete Einstellung der Sitzposition umgerechnet werden und dass diese Einstellung der Sitzposition in Form gerätespezifischer Einstellungswerte 6 wie zum Beispiel "Sitz in Raste 3" ausgedrückt werden. Die gerätespezifischen Einstellungswerte 6 können auf die einzustellenden Gerätebestandteile wie zum Beispiel Sitze oder Rückspiegel oder auf Funktionen 7 wie zum Beispiel die Innenraumtemperatur angewendet werden, um diese auf den Einstellungswert zu setzen. Nach Ausführung der Einstellungen befindet sich das Kraftfahrzeug 1 in einem an den individuellen Benutzer 8 optimal angepassten Zustand.

Der besondere Vorteil der Erfindung wird durch die Geräteunabhängigkeit der Referenzwerte 4 erreicht. Das heißt, dass mit denselben Werten 4 auf dem Speichermedium 3 ein völlig anderes Gerät 1', zum Beispiel ein Kraftfahrzeug anderen Typs, ebenfalls individuell an den Benutzer 8 angepasst werden kann. Für den Benutzer besteht diesbezüglich kein Unterschied in der Bedienung, da er dasselbe Speichermedium 3 mit denselben Referenzwerten 4 verwendet, um über eine entsprechende Schnittstelle 2' die Referenzwerte 4 an das andere Gerät 1' zu übermitteln. Dort werden die Referenzwerte 4 dann von einer Verarbeitungseinheit 5' in gerätespezifische Einstellungswerte 6' umgewandelt, die sich von den Einstellungswerten 6 des ersten Gerätes 1 erheblich unterscheiden können. Nach Ausführung der Einstellungen an den Gerätebestandteilen beziehungsweise Funktionen 7' liegt das Gerät 1' in einem Zustand vor, welcher ebenfalls eine für den Benutzer 8 optimale Einstellung aufweist.

Die Erfindung erlaubt es somit, die auf dem externen Speichermedium 3 abgelegten Referenzwerte, bei denen es sich zum Beispiel direkt um biometrische Kennzahlen des Benutzers oder andere normierte Werte handeln kann, für völlig verschiedene Geräte 1, 1' wie zum Beispiel Fahrzeuge unterschiedlicher Hersteller oder unterschiedliche Modellreihen desselben Herstellers zu verwenden. Hierfür ist nur eine einmalige Abspeicherung der Referenzwerte auf dem Speichermedium 3 erforderlich.

Für den Fall, dass mehrere Geräte 1, 1' ihre Einstellungen auf einem externen Speichermedium 3 ablegen, wird der benötigte Speicherplatz und damit die Größe und der Preis des Speichermediums reduziert, da für jede Größe jeweils nur ein Referenzwert statt mehrerer gerätespezifischer Einstellungswerte abgelegt werden müssen.

Die Eingabe beziehungsweise Abspeicherung von benutzerspezifischen Einstellungen 4 kann so erfolgen, dass der Benutzer 8 an einem beliebigen Gerät 1 oder 1' erstmalig in herkömmlicher Weise "von Hand" seine Einstellungen vornimmt, und dass das Gerät beziehungsweise die Verarbeitungseinheit 5 oder 5' dann die gerätespezifischen Einstellungswerte 6 oder 6' in geräteunabhängige Referenzwerte 4 umwandelt und über die Schnittstelle 2 beziehungsweise 2' auf dem Speichermedium 3 abspeichert.

In manchen Fällen ist es auch möglich, die Referenzwerte direkt auf dem Speichermedium 3 abzulegen, also ohne an einem Gerät 1 oder 1' Einstellungen vorzunehmen. Dies ist insbesondere bei bekannten und leicht feststellbaren biometrischen Werten wie zum Beispiel der Körpergröße möglich.

## Patentansprüche

1. Verfahren zur benutzerspezifischen Einstellung eines Gerätes, insbesondere eines Kraftfahrzeuges (1, 1'), wobei benutzerspezifische Daten auf einem externen Speichermedium (3) abgespeichert werden und die Einstellung des Gerätes anhand dieser Daten vorgenommen wird,
**dadurch gekennzeichnet, dass** die Daten insgesamt oder teilweise geräteunabhängige Referenzwerte (4) sind.

2. Verfahren nach Anspruch 1,
**dadurch gekennzeichnet, dass** die Referenzwerte (4) biometrische Daten enthalten.

3. Verfahren nach Anspruch 1 oder 2,
**dadurch gekennzeichnet, dass** die Referenzwerte (4) durch Umwandlung von vorgegebenen Geräteeinstellungen (6, 6') gewonnen werden.

4. Verfahren zur benutzerspezifischen Einstellung eines Kraftfahrzeuges (1, 1'), nach mindestens einem der Ansprüche 1 bis 3,
**dadurch gekennzeichnet, dass** bestimmte Einzeleinstellungen während der Benutzung des Kraftfahrzeuges variiert werden.

5. Verfahren nach Anspruch 4,
**dadurch gekennzeichnet, dass** die Positionseinstellung des Sitzes in Grenzen stufenlos variiert wird.

6. Vorrichtung zur benutzerspezifischen Einstellung eines Gerätes, insbesondere eines Kraftfahrzeuges (1, 1'), enthaltend ein externes Speichermedium (3) für benutzerspezifische Daten (4) sowie eine Verarbeitungseinheit (5, 5'), welche diese Daten lesen und entsprechende Veränderungen des Gerätes (1, 1') vornehmen kann,
**dadurch gekennzeichnet, dass** die Verarbeitungseinheit so eingerichtet ist, dass sie Daten in Form von geräteunabhängigen Referenzwerten (4) in gerätespezifische Einstellungswerte (6, 6') umwandeln kann.

7. Vorrichtung nach Anspruch 6,
**dadurch gekennzeichnet, dass** die Verarbeitungseinheit (5, 5') so eingerichtet ist, dass sie gerätespezifische Einstellungswerte (6, 6') in geräteunabhängige Referenzwerte (4) umwandeln kann.

8. Vorrichtung nach einem der Ansprüche 6 oder 7,
**dadurch gekennzeichnet, dass** das externe Speichermedium eine Chipkarte (3), ein Mobiltelefon oder ein Computer ist.

9. Vorrichtung nach mindestens einem der Ansprüche 6 bis 8,
**dadurch gekennzeichnet, dass** das externe Speichermedium (3) und die Verarbeitungseinheit (5, 5') Mittel für eine drahtlose Datenübertragung, vorzugsweise über Funk oder Infrarot, aufweisen.

10. Vorrichtung nach mindestens einem der Ansprüche 6 bis 9,
**dadurch gekennzeichnet, dass** die Verarbeitungseinheit (5, 5') so eingerichtet ist, dass sie während des Betriebes des Gerätes (1, 1') autonom Einstellungsveränderungen ausführen kann.

## Claims

1. Method for the user-specific adjustment of a piece of equipment, in particular of a motor vehicle (1, 1'), user-specific data being stored on an external storage medium (3) and the adjustment of the piece of equipment being performed by means of this data, **characterized in that** the data items all or partially comprise reference values (4) which are independent of equipment.

2. Method according to Claim 1, **characterized in that** the reference values (4) contain biometric data.

3. Method according to Claim 1 or 2, **characterized in that** the reference values (4) are acquired by converting predefined equipment settings (6, 6').

4. Method for the user-specific adjustment of a motor vehicle (1, 1') according to at least one of Claims 1 to 3, **characterized in that** specific individual adjustments are varied during the use of the motor vehicle.

5. Method according to Claim 4, **characterized in that** the position adjustment of the seat is infinitely variable within limits.

6. Device for the user-specific adjustment of a piece of equipment, in particular of a motor vehicle (1, 1'), containing an external storage medium (3) for user-specific data (4) as well as a processing unit (5, 5') which can read this data and can make corresponding changes to the equipment (1, 1'), **characterized in that** the processing unit is configured in such a way that it can convert data in the form of reference values (4) which are independent of equipment into adjustment values (6, 6') which are equipment-specific.

7. Device according to Claim 6, **characterized in that** the processing unit (5, 5') is configured in such a way that it can convert equipment-specific adjustment values (6, 6') into reference values (4) which are independent of equipment.

8. Device according to one of Claims 6 or 7, **characterized in that** the external storage medium is a chip card (3), a mobile phone or a computer.

9. Device according to at least one of Claims 6 to 8, **characterized in that** the external storage medium (3) and the processing unit (5, 5') have means for wireless data transmission, preferably via radio or infrared.

10. Device according to at least one of Claims 6 to 9, **characterized in that** the processing unit (5, 5') is configured in such a way that it can independently carry out adjustment changes while the equipment (1, 1') is operating.

## Revendications

1. Procédé pour régler un appareil de manière spécifique à l'utilisateur, notamment un véhicule automobile (1, 1'), selon lequel on enregistre des données spécifiques à l'utilisateur sur un support de mémoire externe (3) et on règle l'appareil à l'aide de ces données,
**caractérisé en ce que**
les données sont globalement ou partiellement des valeurs de référence (4) indépendantes de l'appareil.

2. Procédé selon la revendication 1,
**caractérisé en ce que**
les valeurs de référence (4) contiennent des données biométriques.

3. Procédé selon la revendication 1 ou 2,
**caractérisé en ce que**
les valeurs de référence (4) s'obtiennent par conversion de réglage pré-définie de l'appareil (6, 6').

4. Procédé de réglage d'un véhicule automobile (1, 1') de manière spécifique à l'utilisateur selon au moins l'une des revendications 1 à 3,
**caractérisé en ce qu'**
on modifie certains réglages pendant l'utilisation du véhicule automobile.

5. Procédé selon la revendication 4,
**caractérisé en ce qu'**
on modifie en continu le réglage de la position du siège dans des limites.

6. Dispositif de réglage d'un appareil d'une manière spécifique à l'utilisateur, notamment le réglage d'un véhicule automobile (1, 1'), contenant un support de mémoire externe (3) pour des données spécifiques à l'utilisateur (4) ainsi qu'une unité de traitement (5, 5') pour lire ces données et produire des modifications correspondantes de l'appareil (1, 1'),
**caractérisé en ce que**
l'unité de traitement est installée pour convertir les données sous la forme de valeurs de référence (4) indépendantes de l'appareil, en valeurs de réglage (6, 6') spécifiques à l'appareil.

7. Dispositif selon la revendication 6,
**caractérisé en ce que**
l'unité de traitement (5, 5') est installée pour convertir des valeurs de réglage spécifiques à l'appareil (6, 6') en des valeurs de référence (4) indépendantes de l'appareil.

8. Dispositif selon l'une des revendications 6 ou 7,
**caractérisé en ce que**
le support de mémoire externe est une carte à puce (3), un téléphone mobile ou un ordinateur.

9. Dispositif selon au moins l'une des revendications 6 à 8,
**caractérisé en ce que**
le support de mémoire externe (3) et l'unité de traitement (5, 5') comportent des moyens de transmission sans fil, de préférence de transmission par radio ou par infrarouge.

10. Dispositif selon au moins l'une des revendications 6 à 9,
**caractérisé en ce que**
l'unité de traitement (5, 5') est installée pour effectuer de manière autonome des variations de réglage pendant le fonctionnement de l'appareil (1, 1').
